(19) Europäisches Patentamt / European Patent Office / Office européen des brevets

(11) **EP 3 854 136 B1**

(12) **FASCICULE DE BREVET EUROPEEN**

(45) Date de publication et mention
de la délivrance du brevet:
**31.08.2022 Bulletin 2022/35**

(21) Numéro de dépôt: **19732661.4**

(22) Date de dépôt: **24.06.2019**

(51) Classification Internationale des Brevets (IPC):
**H04L 67/1004** (2022.01)    **H04W 88/18** (2009.01)
**H04W 28/02** (2009.01)    **H04W 76/22** (2018.01)

(52) Classification Coopérative des Brevets (CPC):
**H04L 67/1004;** H04W 28/0268; H04W 76/22;
H04W 88/18

(86) Numéro de dépôt international:
**PCT/EP2019/066690**

(87) Numéro de publication internationale:
**WO 2020/057787 (26.03.2020 Gazette 2020/13)**

(54) **PROCÉDÉ DE RÉATTRIBUTION D'UN SERVEUR PÉRIPHÉRIQUE DE TRAITEMENT DE DONNÉES**

VERFAHREN ZUR NEUZUWEISUNG EINES DATENVERARBEITENDEN PERIPHERIESERVERS

METHOD FOR REALLOCATING A DATA PROCESSING PERIPHERAL SERVER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.09.2018 FR 1871065**

(43) Date de publication de la demande:
**28.07.2021 Bulletin 2021/30**

(73) Titulaires:
• **Renault s.a.s**
**92100 Boulogne Billancourt (FR)**
• **NISSAN MOTOR CO., LTD.**
**Yokohama-shi, Kanagawa 221-0023 (JP)**

(72) Inventeurs:
• **PERRAUD, Eric**
**31830 Plaisance du Touch (FR)**
• **SESIA, Stefania**
**06330 Roquefort les Pins (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**US-A1- 2013 311 551    US-A1- 2017 220 394**

• **-: "Mobile Edge Computing (MEC); End to End
Mobility Aspects", , 23 juin 2017 (2017-06-23),
pages 1-53, XP055430420, 650 Route des
Lucioles F-06921 Sophia Antipolis Cedex -
FRANCE Extrait de l'Internet:
URL:https://docbox.etsi.org/ISG/MEC/70-Dra
ft/0018E2EMobility/MEC-0018E2EMobilityv034 .
docx [extrait le 2017-11-30]**

EP 3 854 136 B1

**Description**

La présente invention se rapporte de manière générale aux domaines des télécommunications et de l'informatique et concerne plus précisément un procédé de réattribution d'un serveur périphérique de traitement de données dans une architecture MEC (d'après l'anglais « Mobile Edge Computing »).

L'architecture MEC telle que définie dans la spécification ETSI GS MEC 003 (« European Telecommunications Standards Institute Group Spécification Mobile Edge Computing ») permet de déporter certains calculs effectués dans un terminal mobile vers des serveurs distribués, localisés dans une zone géographique restreinte autour de la position du terminal mobile et/ou centralisés dans l'architecture MEC. Cela permet, notamment pour des dispositifs mobiles embarqués dans un véhicule connecté, de profiter d'une puissance de calcul très grande disponible dans ces serveurs mais pas dans le calculateur du véhicule, de mutualiser certains équipements entre véhicules connectés, de réduire les contraintes de dimensionnement énergétique et de dissipation thermique, et de réduire l'empreinte carbone d'un tel véhicule connecté. Ces calculs concernent par exemple une cartographie haute définition de la route, enrichie d'événements en temps réel et qui peut être partagée entre véhicules connectés, ainsi que la détermination d'un horizon virtuel aussi appelé horizon électronique pour un véhicule, c'est-à-dire des objets ou événements survenant dans un futur proche mais non accessibles immédiatement par les capteurs embarqués dans le véhicule.

L'usage de cette architecture se heurte à la difficulté de sélectionner le serveur le plus approprié pour fournir la qualité de service demandée notamment pour un véhicule en mouvement. La norme définit des procédures de changement de serveur pour le traitement des données d'un terminal mobile lorsque celui-ci effectue un « hand-over » ou transfert intercellulaire en mode connecté, afin d'utiliser le serveur le plus proche du terminal mobile et donc de diminuer le temps de transfert des données entre le serveur et le terminal mobile. Cependant ces procédures ne permettent pas de garantir une qualité de service de bout en bout permettant le traitement des données dans le laps de temps souhaité par le terminal mobile, notamment lorsqu'il s'agit d'un dispositif mobile embarqué dans un véhicule connecté ayant une forte mobilité et de fortes exigences temps réel.

US 2017/220394 A1 divulgue la commande par un serveur de commande de nuage de la migration d'un traitement de nuage distribué (machine virtuelle) pour un dispositif mobile d'un premier serveur de nuage à un second serveur, selon un critère de proximité, par exemple l'estimation d'un trajet de déplacement du dispositif mobile, et/ou un critère de latence, défini comme un laps de temps entre la transmission d'une entrée utilisateur au serveur de nuage, et le moment où un résultat d'exécution d'une charge de travail traitée selon l'entrée utilisateur est renvoyé du serveur de nuage au dispositif mobile.

Mobile Edge Computing (MEC); End to End Mobility Aspects", 23 juin 2017 (2017-06-23) est la spécification de l'ETSI pour la mobilité dans le Mobile Edge Computing, MEC, pour les applications à faible latence telles que la voiture auto-conductrice. Un ensemble de serveurs Mobile Edge sur lesquels une application ME est autorisée à fonctionner ("groupe de relocalisation") est préconfiguré en fonction de la mobilité de l'UE. Le groupe peut être créé en fonction de l'emplacement topologique ou physique des hôtes ME par rapport aux utilisateurs finaux de l'application. Les utilisateurs peuvent influencer la création d'un groupe de relocalisation en fonction de leur qualité d'expérience (QoE).

US2013/311551 A1 concerne la sélection d'un serveur périphérique pour desservir un dispositif utilisateur sur la base de la "latence effective", c'est-à-dire la vitesse de réponse du serveur à une demande de l'utilisateur. Par exemple, un serveur de périphérie peut être physiquement plus proche du dispositif de l'utilisateur mais, étant fortement encombré, il a un temps de réponse plus mauvais, c'est-à-dire une latence effective, de sorte qu'un autre serveur de périphérie est mieux choisi. La latence effective est basée sur l'encombrement et la disponibilité des ressources du serveur, ce document suggère plutôt sa détermination par le serveur de périphérie.

Un des buts de l'invention est de remédier à au moins une partie des inconvénients de la technique antérieure en fournissant un procédé de réattribution de serveur périphérique de traitement de données dans une telle architecture, qui permette de prévenir une dégradation de qualité de service gênante pour un dispositif mobile, par exemple un dispositif mobile embarqué dans un véhicule connecté, quelle que soit l'origine de cette dégradation.

A cette fin, l'invention propose un procédé de réattribution d'un serveur périphérique de traitement de données dans une architecture MEC, comportant:

- une étape préalable d'attribution d'un serveur périphérique courant pour traiter des données pour un dispositif mobile, par un organe de gestion,
- une étape de sélection d'un nouveau serveur périphérique, par ledit organe de gestion,
- et une étape de notification de réattribution de serveur périphérique, audit serveur périphérique courant, par ledit organe de gestion,

ledit procédé de réattribution étant caractérisé en ce que ladite étape de sélection est précédée d'une étape de réception par ledit organe de gestion, d'un message envoyé par ledit dispositif mobile et comportant une donnée représentative d'une qualité de service mesurée au niveau dudit dispositif mobile. Ledit procédé est mis en œuvre majoritairement dans l'organe de gestion.

Grâce à l'invention, la qualité de service du traitement de données déporté effectué pour le dispositif mobile n'est pas seulement traitée par les différents serveurs de l'architecture MEC, puisque le dispositif mobile est actif dans la gestion de sa qualité de service de manière simple par l'envoi d'un message à l'organe de gestion dans l'architecture MEC. L'organe de gestion est par exemple implémenté au niveau de l'orchestrateur MEO (d'après l'anglais « Mobile Edge Orchestrator ») défini par la norme, implémenté dans un serveur ou distribué dans plusieurs serveurs. L'invention va à l'encontre de la philosophie de l'architecture MEC qui vise à s'adapter aux changements de contexte du dispositif mobile de manière transparente pour celui-ci, sans pour autant la dénaturer : l'envoi du message par le dispositif mobile ne nécessite pas pour celui-ci de connaître son serveur de traitement de données et permet néanmoins de faire respecter plus rigoureusement la qualité de service nécessaire au niveau du dispositif mobile.

Selon une caractéristique avantageuse du procédé selon l'invention, ladite qualité de service mesurée est représentative de l'intervalle de temps entre l'instant où une requête de traitement de données est envoyée par le dispositif mobile au serveur périphérique courant et l'instant où le dispositif mobile reçoit les résultats dudit traitement de données.

Cette caractéristique permet de prendre en compte la qualité de service perçue au niveau du dispositif mobile et pas seulement la qualité de la connexion réseau par exemple.

Selon une autre caractéristique avantageuse de l'invention ladite étape de sélection est précédée d'une étape de comparaison de ladite qualité de service mesurée avec un seuil de qualité de service, ladite étape de sélection étant déclenchée dès que ladite qualité de service mesurée atteint ledit seuil de qualité de service. Cette caractéristique permet de mettre en place une stratégie garantissant un niveau minimal de qualité de service pour le dispositif mobile.

Selon encore une autre caractéristique avantageuse de l'invention, lors de ladite étape de sélection, ledit organe de gestion sélectionne ledit nouveau serveur périphérique comme celui ayant une qualité de service estimée meilleure que ladite qualité de service mesurée dans une liste de serveurs périphériques autres que le serveur périphérique courant, lesdits serveurs périphériques étant :

- aptes à traiter lesdites données du dispositif mobile,
- connectés à la station de base courante du dispositif mobile ou à des stations de base voisines de ladite station de base courante,
- et bénéficiant du service RNIS (d'après l'anglais « Radio Network Information Service ») d'information du réseau radio,

ladite qualité de service estimée ayant été estimée en utilisant un modèle déterministe ou prédictif. Ainsi on peut garantir la tenue d'une qualité de service minimum.

Avantageusement les serveurs périphériques de ladite liste sont également interfacés au service LS (d'après l'anglais « Location Service ») de localisation et au service BWMS (d'après l'anglais « BandWidth Management Service ») de gestion de bande passante, complémentaire du service RNIS. Cela permet plus de flexibilité dans l'implémentation du procédé en multipliant les sources d'information.

Selon encore une autre caractéristique avantageuse de l'invention, ladite étape de sélection est précédée d'une étape de pré-sélection de plusieurs serveurs périphériques lors de laquelle ledit organe de gestion envoie une requête à chacun desdits serveurs périphériques pré-sélectionnés et reçoit en réponse une estimation a priori de la qualité de service relative à la connexion de chacun desdits serveurs périphériques pré-sélectionnés avec ledit dispositif mobile.

Cette pré-sélection permet d'éviter une dégradation importante de qualité de service lors du changement de serveur périphérique traitant les données du mobile, en anticipant le besoin de réattribution/re-sélection de serveur périphérique. De plus cette étape de pré-sélection permet de mettre à jour l'estimation de qualité de service de la connexion aux serveurs périphériques présélectionnés.

Selon encore une autre caractéristique avantageuse de l'invention, ladite étape de sélection est précédée d'une étape de pré-sélection de plusieurs serveurs périphériques et d'étapes d'instanciation d'une application pour ledit dispositif mobile dans les serveurs périphériques pré-sélectionnés.

Cette pré-sélection et cette pré-instanciation permettent également d'anticiper le besoin de réattribution et d'accélérer celle-ci pour ne pas perdre en qualité de service.

Selon encore une autre caractéristique avantageuse de l'invention, lors de ladite étape de pré-sélection, ledit organe de gestion envoie une requête à chacun desdits serveurs périphériques pré-sélectionnés et reçoit en réponse une estimation de la qualité de service relative à l'application instanciée pour chacun desdits serveurs périphériques pré-sélectionnés.

Cette caractéristique permet de connaître la qualité de service applicative réelle liée aux serveurs périphériques pré-sélectionnés.

Selon encore une autre caractéristique avantageuse de l'invention, lors de ladite étape de sélection, l'organe de gestion tient compte d'un itinéraire prévu pour le dispositif mobile, et d'une vitesse estimée dudit dispositif mobile sur ledit itinéraire.

Cette caractéristique permet de limiter le nombre de réattributions et donc d'économiser des ressources réseau et de calcul.

L'invention concerne aussi un système comprenant un organe de gestion (MEO) et un dispositif mobile apte à envoyer un message comportant une qualité de service mesurée, à l'organe de gestion mettant en œuvre le procédé selon l'invention. Le dispositif mobile est par exemple un module matériel et logiciel de communication embarqué dans un véhicule connecté. Le module de communication est par exemple muni d'une puce 4 ou 5G (G comme génération de technologie de téléphonie mobile).

Avantageusement, le dispositif mobile selon l'invention est apte à envoyer périodiquement un message comportant une qualité de service mesurée audit organe de gestion. Cela permet à celui-ci de superviser la qualité de service rendue au dispositif mobile et de déterminer des statistiques ou à entraîner un modèle prédictif sur celle-ci.

Avantageusement encore, le dispositif mobile comporte des moyens aptes à déclencher l'envoi dudit message lorsque ladite qualité de service mesurée est comprise entre un seuil de qualité de service à ne pas dépasser et une valeur située 20% en amont dudit seuil de qualité de service à ne pas dépasser. Ainsi l'organe de gestion peut anticiper une réattribution de serveur périphérique pour traiter les données du dispositif mobile. Il est à noter que la valeur située 20% en amont du seuil de qualité de service à ne pas dépasser est inférieure de 20% audit seuil ou supérieure de 20% audit seuil en fonction du sens de dépassement c'est-à-dire de la définition de la qualité de service mesurée. Notamment si celle-ci correspond à un temps de réponse, la qualité de service mesurée ne doit pas dépasser un seuil haut. Par contre si la qualité de service mesurée est exprimée comme la différence entre un temps maximum de réponse et un temps de réponse mesuré, la qualité de service mesurée ne doit pas dépasser un seuil bas. Cette valeur de 20% est bien sûr indicative, une valeur plus petite pouvant être utilisée.

Le dispositif mobile selon l'invention présente des avantages analogues à ceux du procédé de réattribution selon l'invention.

D'autres caractéristiques et avantages apparaîtront à la lecture d'un mode de réalisation préféré décrit en référence aux figures dans lesquelles :

- la figure 1 représente des premières étapes du procédé de réattribution selon l'invention, dans ce mode de réalisation selon l'invention,
- et la figure 2 représente des étapes suivantes du procédé de réattribution selon l'invention, dans ce mode de réalisation selon l'invention.

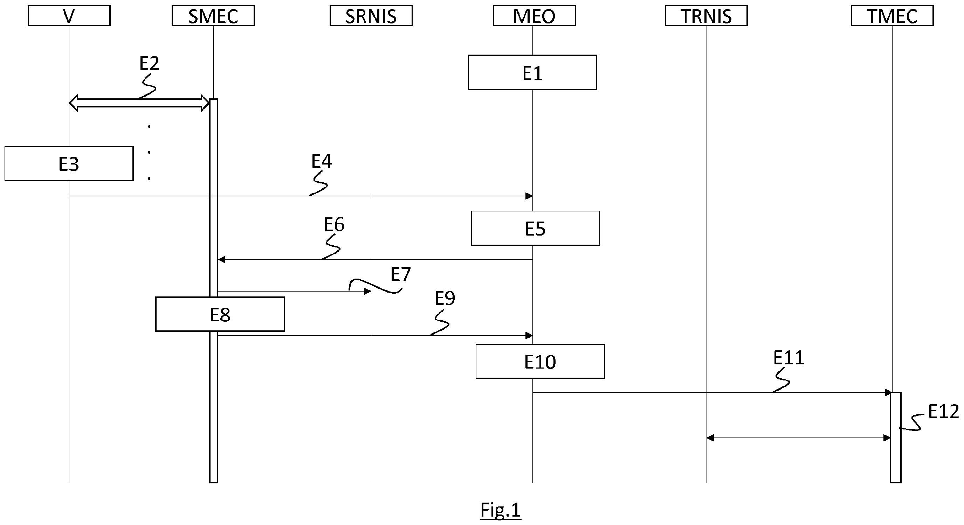

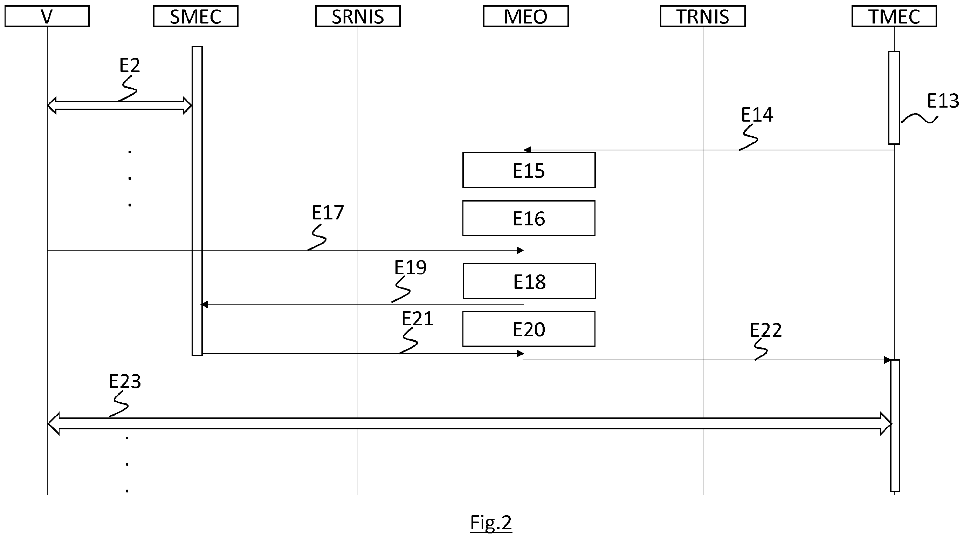

Selon un mode préféré de réalisation de l'invention représenté aux **figures 1 et 2**, le procédé de réattribution d'un serveur périphérique selon l'invention est implémenté au moins en partie dans un organe de gestion au niveau de l'orchestrateur MEO. Certaines étapes décrites sont cependant réalisées dans un dispositif mobile ou dans des serveurs périphériques gérés par l'organe de gestion. Grâce à l'invention, l'organe de gestion garantit à tout moment que le serveur périphérique sélectionné pour traiter les données du dispositif mobile embarqué dans un véhicule V, est approprié pour réaliser le service demandé et respecte la qualité de service demandée.

Lors d'une étape E1, le dispositif mobile du véhicule V s'enregistre auprès de l'organe de gestion pour le traitement débarqué d'une fonctionnalité, par exemple dans cet exemple de réalisation de l'invention, le calcul d'un horizon électronique. L'organe de gestion est par exemple un service propriétaire implémenté dans un ou plusieurs serveurs proposant certains services débarqués pour l'automobile tels que le calcul d'horizon électronique ou de cartographie haute définition. Il gère plusieurs serveurs périphériques ou centraux aptes à effectuer les calculs nécessaires pour rendre ces services. Lors de cette étape E1 d'enregistrement, le dispositif mobile du véhicule V indique sa position, le service auquel il souhaite souscrire donc ici l'horizon électronique, ainsi qu'une qualité de service cible pour la réalisation de ce service. Pour cela le message « Register » de la norme est par exemple utilisé.

Lors de cette étape E1, suite à la réception du message Register, l'organe de gestion choisit un serveur périphérique courant approprié, c'est-à-dire accessible depuis la station de base à laquelle est attaché le dispositif mobile, et apte à fournir le service d'horizon électronique avec la qualité de service cible demandée par le dispositif mobile. Pour cela l'organe de gestion estime une qualité de service a priori que peut fournir chacun des serveurs périphériques situés dans la zone radio accessible par le dispositif mobile, en interrogeant ces serveurs périphériques avec un message « MECResourceQuery » par exemple (le message défini « QueryAppInstanceInfo » pourrait également faire l'affaire mais nécessite le démarrage de l'application sur le serveur interrogé).

L'estimation de cette qualité de service a priori sera explicitée en détail plus loin. Afin de faire correspondre un serveur périphérique avec la zone radio accessible par le dispositif mobile, l'organe de gestion est interfacé avec le service RNIS de l'opérateur auquel est abonné le dispositif mobile. Le message Get(PLMN_info) permet notamment de connaître les identifiants de cellule associés à un serveur périphérique. Afin de gérer la mobilité du dispositif mobile en itinérance inter-opérateurs, l'organe de gestion tient compte des accords d'itinérance du dispositif mobile avec d'autres opérateurs que celui avec lequel le dispositif mobile est abonné. De plus l'organe de gestion est lui-même interfacé à plusieurs réseaux d'opérateurs et donc ses serveurs périphériques sont interfacés également à plusieurs réseaux d'opérateurs.

A la fin de l'étape E1, un serveur périphérique courant SMEC apte à traiter les données du dispositif mobile pour lui fournir un horizon électronique, est attribué au dispositif mobile.

L'étape E2 est la fourniture du service d'horizon électronique au dispositif mobile par le serveur périphérique courant SMEC ayant instancié une application d'horizon électronique pour le véhicule V. Lors de cette étape des données sont échangées entre le véhicule V et le serveur périphérique courant SMEC :

- Le véhicule V envoie au serveur périphérique courant SMEC des portions de trajet, la position précise du véhicule,
- Le serveur périphérique courant SMEC envoie au véhicule V des objets et évènements d'intérêt survenant dans un futur proche sur le trajet du véhicule.

Le serveur périphérique courant SMEC implémente dans cet exemple de réalisation de l'invention plusieurs éléments de l'architecture MEC proposée par l'ETSI , notamment l'instance applicative fournissant un service au véhicule V, mais aussi l'élément de gestion S-MEPM (d'après l'anglais « Serving Mobile Edge Platform Manager ») des instances applicatives du serveur périphérique courant SMEC.

L'étape E3 est la mesure de la qualité de service effective (perçue par le dispositif mobile) par le dispositif mobile pour le service d'horizon électronique fourni. Cette qualité de service inclut le temps de calcul de l'horizon électronique sur le serveur périphérique courant SMEC mais aussi le temps de transfert entre une requête du dispositif mobile liée au service et la réponse associée. Cette qualité de service mesurée s'écrit par exemple :

$$Q_{mes} = Q_{cible} - Q_{réelle}$$

Où :

- $Q_{cible}$ est la qualité de service cible demandée par le dispositif mobile et est représentative du temps maximum toléré par le dispositif mobile entre l'instant où une requête liée au service est envoyée par le dispositif mobile au serveur périphérique courant SMEC, et l'instant où le dispositif mobile reçoit les résultats de la requête,
- et $Q_{réelle}$ est l'intervalle de temps réel entre l'instant où une requête liée au service est envoyée par le dispositif mobile au serveur périphérique courant SMEC, et l'instant où le dispositif mobile reçoit les résultats de la requête.

Lors de cette étape E3, le dispositif mobile compare la qualité de service mesurée $Q_{mes}$ avec un premier seuil de qualité de service $Q_1$ strictement négatif (c'est-à-dire que ce seuil n'est pas atteint tant que la qualité de service mesurée est meilleure que la qualité de service cible) et pouvant être lié au type de service fourni. Dans cet exemple de réalisation de l'invention, on suppose que la qualité de service mesurée $Q_{mes}$ à l'étape E3 est descendue au-dessous du seuil de qualité de service $Q_1$, ce qui déclenche l'étape E4. Cette dégradation de la qualité de service est due par exemple :

- à une dégradation de la qualité de service au niveau radio ou au niveau cœur de réseau, si des surplus de données sont échangés au niveau radio ou avec le serveur périphérique courant SMEC, ces données en surplus pouvant de surcroît être prioritaires par rapport aux données du dispositif mobile ;
- à une mobilité du dispositif mobile qui quitte la couverture du serveur périphérique courant SMEC ou de l'opérateur courant ;
- à une exigence de qualité de service plus élevée, dans le cas par exemple où le véhicule arrive dans une zone dangereuse nécessitant un affichage plus rapide de l'horizon électronique ;
- ou à une diminution des ressources disponibles dans le serveur périphérique courant SMEC, par exemple si un service prioritaire monopolise des ressources allouées précédemment au dispositif mobile.

L'étape suivante E4 est l'envoi à l'organe de gestion par le dispositif mobile d'un message comportant la qualité de service $Q_{mes}$ mesurée à l'étape E3 ainsi que la localisation du dispositif mobile. Cette localisation correspond par exemple à la « Tracking Area » telles que définies dans la norme 4G. En variante la qualité de service mesurée n'est pas relative à la qualité de service cible mais correspond à $Q_{réelle}$ c'est-à-dire l'intervalle de temps entre l'instant où une requête liée au service est envoyée par le dispositif mobile au serveur périphérique courant SMEC, et l'instant où le dispositif mobile reçoit les résultats de la requête. Dans cette variante le message envoyé à l'étape E4 comporte éventuellement en outre une qualité de service cible demandée par le dispositif mobile, notamment lorsque cette qualité de service cible est différente de celle communiquée à l'étape E1 à l'organe de gestion. Ce message est par exemple envoyé sur une communication UDP (d'après l'anglais «User Datagram Protocol ») ou TCP (d'après l'anglais «Transmission Control Protocol ») , ou bien https par exemple si l'organe de gestion a souscrit à des notifications régulières de qualité de service mesurée par le dispositif mobile. Dans une autre variante le message envoyé par le dispositif mobile comporte une indication du fait que la qualité de service mesurée est moins bonne que la qualité de service cible, au lieu de la qualité de service mesurée. Dans une autre variante le message envoyé à l'étape E4 ne comporte pas la localisation du dispositif mobile, l'organe de gestion ayant la possibilité d'utiliser le service réseau LS (d'après l'anglais « Location Service ») pour obtenir cette localisation lorsque le dispositif mobile est déjà connecté à un serveur périphérique courant. Cette information est néanmoins utile dans ce message E4 si la connexion avec le serveur périphérique courant est perdue ou en cas de perte de couverture réseau.

L'étape suivante E5 est la constatation de la dégradation de la qualité de service par l'organe de gestion en utilisant les données reçues dans le message reçu à l'étape E4. Les étapes suivantes E6 à E9 servent à l'organe de gestion pour déterminer si la dégradation de la qualité de service est due à une mobilité du dispositif mobile.

L'étape E6 est l'envoi par l'organe de gestion d'un message http « Get » au serveur périphérique courant SMEC demandant la cause de la dégradation de qualité de service constatée à l'étape E5.

L'étape E7 est l'utilisation par le serveur périphérique courant SMEC du service SRNIS qui est le service RNIS auquel il est connecté, via une interface de programmation normalisée. Ce service lui permet de connaître les mesures de puissance radio afférentes à la connexion radio entre le dispositif mobile et sa station de base courante ainsi que les mesures de puissance radio entre le dispositif mobile et ses stations de base voisines. Ainsi il détermine lors d'une étape E8 si la dégradation de la qualité de service constatée à l'étape E5 est due à un hand-over en cours, ou à une perte de couverture radio sur l'opérateur courant du dispositif mobile, ou à une autre cause.

L'étape E9 est l'envoi par le serveur périphérique courant SMEC d'une réponse au message reçu à l'étape E6, indiquant si la dégradation de la qualité de service constatée à l'étape E5 est due à une mobilité du dispositif mobile ou à une autre cause. Notamment dans cette étape E9 le serveur périphérique courant SMEC indique dans la réponse qu'il envoie à l'organe de gestion si la dégradation de la qualité de service constatée à l'étape E5 est due à un hand-over ou une perte de couverture radio.

L'étape E10 est une étape de pré-sélection, par l'organe de gestion, de serveurs périphériques TMEC autres que le serveur périphérique courant SMEC, dans une liste de serveurs périphériques gérés par l'organe de gestion, cette pré-sélection ne retenant que les serveurs périphériques :

- aptes à traiter les données du dispositif mobile en terme de fonctionnalité (ici l'horizon électronique) et en terme de ressources
- et de préférence connectés aux services réseau LS, RNIS et BWMS (d'après l'anglais « BandWidth Management Service »),
- et accessibles :

    o depuis la station de base courante du dispositif mobile (i.e. à laquelle il est connecté) si la cause de dégradation de la qualité de service reçue à l'étape E9 est due à une autre cause qu'une mobilité du dispositif mobile. Cette cause est par exemple un changement de qualité de service cible demandée (ce qui détectable par l'organe de gestion notamment lorsque la qualité de service cible est contenue dans le message envoyé lors de l'étape E4), ou une dégradation de la connexion cœur de réseau au serveur périphérique courant SMEC, ou une baisse des ressources au niveau du serveur périphérique courant SMEC;
    o ou depuis la station de base cible à laquelle va être attaché le dispositif mobile si la cause de dégradation de la qualité de service reçue à l'étape E9 concerne un hand-over (dans ce cas le serveur périphérique courant SMEC remonte également l'identité de la cellule cible à l'organe de gestion) ;
o ou depuis des stations de base proches de la cellule courante mais gérées par un autre opérateur que l'opérateur courant, cet autre opérateur ayant un accord d'itinérance avec le dispositif mobile et avec l'organe de gestion si la cause de dégradation de la qualité de service reçue à l'étape E9 concerne une perte de couverture radio.

Dans le cas où le dispositif mobile est en situation de hand-over, l'organe de gestion modifie éventuellement la station de base cible à prendre en compte pour la pré-sélection d'un nouveau serveur périphérique courant en fonction d'un itinéraire prévu pour le véhicule et de la vitesse estimée de celui-ci. Cela est par exemple le cas lorsque l'organe de gestion ne connait pas la station de base cible du handover radio.

Afin de pouvoir affiner la pré-sélection sur ces serveurs périphériques retenus pour ne garder que ceux ayant une qualité de service meilleure que la qualité de service cible voire la qualité de service mesurée, les étapes E11 à E15 suivantes sont mises en œuvre.

L'étape E11 est l'envoi par l'organe de gestion à chacun des serveurs périphériques TMEC retenus à l'étape E10, d'une requête http « Get » demandant au serveur périphérique TMEC concerné une estimation de la qualité de service que celui-ci est apte à fournir au service d'horizon électronique. L'estimation de qualité de service est demandée en termes de ressources et de connectivité, en tenant compte d'une priorité donnée à l'application d'horizon électronique par rapport aux autres applications qui tournent sur le serveur périphérique TMEC concerné, cette priorité étant indiquée dans la requête. Les serveurs périphériques TMEC ont par exemple pour cela un service d'estimation de la qualité de service enregistré et authentifié comme service disponible interrogeable par un serveur distant autorisé.

L'étape E12 est l'utilisation par chacun des serveurs périphériques TMEC interrogés à l'étape E11, du service TRNIS qui est le service RNIS auquel le serveur périphérique TMEC concerné est connecté, et l'estimation de la qualité de service a priori de la connexion entre le dispositif mobile et le serveur périphérique TMEC concerné. Pour cela le serveur périphérique TMEC utilise les informations données par le service TRNIS en termes notamment de « Radio Access Bearer » donnant notamment le débit et la priorité radio allouables entre le dispositif mobile et le serveur périphérique TMEC concerné. L'estimation de cette qualité de service est détaillée plus loin.

L'étape E13 est l'instanciation par chacun des serveurs périphériques TMEC interrogés à l'étape E11, de l'application d'horizon électronique pour le dispositif mobile, et l'évaluation de la qualité de service associée au niveau applicatif notamment en termes de temps de réponse de calcul. En variante cette évaluation se fait sans instanciation de l'application mais par estimation des ressources de mémoire et de calcul restant disponibles dans le serveur périphérique TMEC concerné.

L'étape suivante E14 est la réception par l'organe de gestion des réponses des serveurs périphériques TMEC aux messages envoyés à l'étape E11. Ces réponses comportent des estimations de la qualité de service en termes de connectivité et de ressources applicatives qui seraient allouées par chacun des serveurs périphériques TMEC interrogés s'ils fournissaient le service d'horizon électronique au dispositif mobile.

L'étape suivante E15 est la consolidation par l'organe de gestion des estimations reçues à l'étape E14. Plus précisément dans cette étape E15, l'organe de gestion estime la qualité de service globale apte à être fournie par chacun des serveurs périphériques TMEC interrogés à l'étape E11. Cette qualité de service globale $Q_{globale}$ est par exemple égale à :

$$Q_{globale} = Q_{cible} - Q_{estimée,}$$

où $Q_{estimée}$ est une qualité de service estimée à partir d'un modèle déterministe ou d'un modèle prédictif, comme détaillé plus loin.

Lors de l'étape suivante E16 l'organe de gestion classe ces serveurs périphériques TMEC par ordre croissant de qualité de service globale estimée précédemment, pour chaque station de base identifiée à l'étape E10 comme pertinente pour desservir le dispositif mobile lors du changement de serveur périphérique courant à venir. Puis dans cette étape E16 l'organe de gestion présélectionne pour chaque station de base identifiée le serveur périphérique ayant la meilleure qualité de service globale estimée, celle-ci devant être de surcroît strictement positive ou en tout cas meilleure que la qualité de service mesurée reçue à l'étape E4. En variante dans cette étape E16 l'organe de gestion présélectionne pour chaque station de base identifié le serveur périphérique ayant une qualité de service globale estimée strictement positive mais dont le coût d'utilisation est moindre pour le dispositif mobile.

L'étape suivante E17 est la réception par l'organe de gestion d'un message envoyé le dispositif mobile et comportant une nouvelle qualité de service $Q_{mes}$ mesurée par le dispositif mobile, ainsi que la nouvelle localisation du dispositif mobile. On suppose dans cet exemple d'utilisation de l'invention, que la qualité de service mesurée est descendue au-dessous d'un deuxième seuil de qualité de service $Q_2$, inférieur au premier seuil $Q_1$ de qualité de service, par exemple de 20%. En variante le message envoyé dans cette étape E17 par le dispositif mobile ne comporte pas la localisation du dispositif mobile, celle-ci étant dans cette variante récupérée par l'interface LS.

L'étape suivante E18, déclenchée par l'organe de gestion du fait que la qualité de service mesurée $Q_{mes}$ est descendue au-dessous du deuxième seuil de qualité de service $Q_2$, est la sélection d'un nouveau serveur périphérique TMEC pour fournir le service d'horizon électronique au dispositif mobile. Si la cause de cette dégradation (identifiée dans les étapes E6 à E9) est uniquement due à une exigence de qualité de service plus élevée, ou à une diminution des ressources disponibles dans le serveur périphérique courant SMEC ou une dégradation de la qualité de la connectivité entre le serveur périphérique courant SMEC et le dispositif mobile, le nouveau serveur périphérique TMEC sélectionné correspond au serveur périphérique TMEC présélectionné à l'étape E16 pour la station de base courante du dispositif mobile. Si la cause de cette dégradation (identifiée dans les étapes E6 à E9) est due à une mobilité du dispositif mobile au sein du même opérateur, et s'il y une ambiguïté sur la station de base cible, l'organe de gestion attend d'être notifié de la fin du handover radio pour connaitre l'identité de la nouvelle station de base via le service SRNIS. Le nouveau serveur périphérique TMEC sélectionné correspond au serveur périphérique TMEC présélectionné à l'étape E16 pour ladite nouvelle station de base du dispositif mobile.

L'étape suivante E19 est l'envoi d'un message par l'organe de gestion au serveur périphérique courant SMEC lui notifiant de la fin de l'exécution de l'application, concerné, via un message de cycle de vie d'une application MEC tel que TerminateAppInsRequest. Sur réception de ce message, le serveur périphérique courant SMEC s'apprête à mettre fin à l'application d'horizon électronique qu'il a instanciée. Dans le cas où l'application fournie au dispositif mobile nécessite de fournir des données stockées dans une mémoire tampon au nouveau serveur périphérique TMEC lors de cette réattribution de serveur périphérique, le serveur périphérique courant SMEC envoie ces données à l'organe de gestion, lors d'une étape E21 qui se déroule par exemple parallèlement à l'étape suivante E20.

L'étape E20 est l'inscription par l'organe de gestion d'une nouvelle règle de routage des données envoyées et reçues par le dispositif mobile concernant le service d'horizon électronique. Pour cela l'organe de gestion utilise l'interface normalisée NEF (d'après l'anglais « Network Exposure Function ») qui permet l'association du descriptif du flux de données concerné PFD (d'après l'anglais « Packet Flow descriptor ») à un nouvel accès de réseau de données DNA (d'après l'anglais « Data Network Access ») dans l'entité PCF (d'après l'anglais « Policy Control Function ») du réseau de données de téléphonie mobile 4 à 5G utilisé. Cette étape permet au dispositif mobile d'envoyer et de recevoir des données vers/depuis le nouveau serveur périphérique sans avoir à gérer le changement des données de routage lors du changement de serveur périphérique.

L'étape suivante E22 est l'envoi d'un message (tel que « ChangeAppInstanceStateRequest » avec le paramètre « ChangedStateTo » mis à « Start ») par l'organe de gestion au nouveau serveur périphérique TMEC lui demandant de faire fonctionner le service d'horizon électronique pré-instancié à l'étape E13. Ce message contient de plus les données éventuellement reçues à l'étape E21.

Enfin l'étape E23 est l'échange de données entre le dispositif mobile et le nouveau serveur périphérique TMEC pour la fourniture du service d'horizon électronique, ce nouveau serveur périphérique TMEC devenant le serveur périphérique courant du dispositif mobile.

L'estimation de la qualité de service pouvant être fournie par un serveur périphérique au dispositif mobile est maintenant détaillée. Elle utilise par exemple un modèle déterministe ou prédictif.

Le modèle déterministe utilise par exemple l'équation suivante :

$$Q_{estimée} = UL + DL + T_{calcul}$$

Où :

- UL est le nombre de transactions (ou communications échangées) effectuées lors de l'envoi d'une requête par le dispositif mobile vers le serveur périphérique, multiplié par un temps de latence estimé ;
- DL est le nombre de de transactions effectuées lors de l'envoi du résultat de la requête par le serveur périphérique d'un message vers le dispositif mobile, multiplié par un temps de latence estimé ;
- et $T_{calcul}$ est une estimation du temps de calcul nécessaire au traitement d'une requête du dispositif mobile. Cette estimation est fonction des ressources matérielles virtualisées sur le serveur périphérique et allouées à l'application d'horizon électronique, notamment de la capacité de stockage allouée, du nombre de processeurs virtuels alloués, de leur fréquence minimum et de leurs types ; ces informations sont accessibles à l'organe de gestion via les services « Virtual Compute Descripteur » et « VirtualStorage Descripteur » ; une variante possible de réalisation est donc l'estimation de $T_{calcul}$ par l'organe de gestion plutôt que sa réception à l'étape E14.

Les temps de latence estimés correspondent au temps de latence de bout en bout entre le dispositif mobile et le serveur périphérique. Leurs valeurs sont déterminées à partir d'un modèle de prédiction de qualité de service utilisant des statistiques sur le trafic de données entre la station de base du dispositif mobile et le serveur périphérique et sur des métriques radio propres à cette station de base ; les statistiques sont fonction du volume de données échangées, des types de connexion utilisés (temps réel, « best effort », etc) et du nombre de connexions existantes.

Le modèle prédictif est utilisé pour prédire la performance du service d'horizon électronique sur le serveur périphérique pour lequel existe déjà un historique sur lequel un système d'apprentissage machine a pu être entraîné, tel qu'un réseau de neurones fournissant en sortie une qualité de service estimée.

Lorsqu'un tel historique existe et est suffisamment consistant pour que le système d'apprentissage fournisse des résultats fiables, le modèle prédictif est préféré au modèle déterministe pour l'estimation de la qualité de service fournie par le serveur périphérique au dispositif mobile.

Il est à noter que de nombreuses variantes de réalisation de l'invention sont possibles, notamment en fonction des cas d'usage du procédé selon l'invention.

De plus certaines étapes du procédé décrit sont optionnelles ou modifiables : en variante l'étape E4 déclenche directement une réattribution de serveur périphérique par l'organe de gestion, l'étape de pré-sélection étant effectuée en continu par l'organe de gestion avant même la réception d'un message envoyé par le dispositif mobile et contenant une qualité de service mesurée. Les étapes E6 à E9 ne sont en variante pas implémentées, l'organe de gestion pouvant détecter une situation de mobilité par d'autres moyens, par exemple en utilisant le service LS.

L'envoi d'un message contenant une qualité de service mesurée par le dispositif mobile à l'organe de gestion est en variante périodique en plus d'être déclenché sous certaines conditions, l'une d'elles pouvant être le passage sous un seuil nul de qualité de service, ou même la détection d'un hand-over de cellule radio.

**Revendications**

1. Procédé de réattribution d'un serveur périphérique de traitement de données dans une architecture Mobile Edge Computing, MEC, comportant:

    - une étape préalable (E1) d'attribution d'un serveur périphérique courant (SMEC) pour traiter des données pour un dispositif mobile, par un organe de gestion (MEO),
    - une étape de sélection (E18) d'un nouveau serveur périphérique (TMEC), par ledit organe de gestion (MEO),
    - et une étape de notification (E19) de réattribution de serveur périphérique, audit serveur périphérique courant (SMEC), par ledit organe de gestion (MEO),

    ledit procédé de réattribution étant **caractérisé en ce que** ladite étape de sélection (E18) est précédée d'une étape de réception (E17) par ledit organe de gestion (MEO),
    d'un message envoyé par ledit dispositif mobile et comportant une donnée représentative d'une qualité de service mesurée au niveau du dispositif mobile.

**2.** Procédé de réattribution selon la revendication 1, **caractérisé en ce que** ladite qualité de service mesurée est représentative de l'intervalle de temps entre l'instant où une requête de traitement de données est envoyée par le dispositif mobile au serveur périphérique courant (SMEC) et l'instant où le dispositif mobile reçoit les résultats dudit traitement de données.

**3.** Procédé de réattribution selon la revendication 1 ou 2, **caractérisé en ce que** ladite étape de sélection (E18) est précédée d'une étape de comparaison de ladite qualité de service mesurée avec un seuil de qualité de service, ladite étape de sélection (E18) étant déclenchée dès que ladite qualité de service mesurée atteint ledit seuil de qualité de service.

**4.** Procédé de réattribution selon l'une quelconque des revendications 1 à 3, **caractérisé en ce que** lors de ladite étape de sélection (E18), ledit organe de gestion sélectionne ledit nouveau serveur périphérique (TMEC) comme celui ayant une qualité de service estimée meilleure que ladite qualité de service mesurée dans une liste de serveurs périphériques autres que le serveur périphérique courant (SMEC), lesdits serveurs périphériques étant :

- aptes à traiter lesdites données du dispositif mobile,
- connectés à la station de base courante du dispositif mobile ou à des stations de base voisines de ladite station de base courante,
- et bénéficiant du service Radio Network Information Service, RNIS, d'information du réseau radio, ladite qualité de service estimée ayant été estimée en utilisant un modèle déterministe ou prédictif.

**5.** Procédé de réattribution selon l'une quelconque des revendications 1 à 4, **caractérisé en ce que** ladite étape de sélection (E18) est précédée d'une étape de pré-sélection (E10 à E16) de plusieurs serveurs périphériques lors de laquelle ledit organe de gestion envoie une requête à chacun desdits serveurs périphériques pré-sélectionnés et reçoit en réponse une estimation a priori de la qualité de service relative à la connexion de chacun desdits serveurs périphériques pré-sélectionnés avec ledit dispositif mobile.

**6.** Procédé de réattribution selon l'une quelconque des revendications 1 à 5, **caractérisé en ce que** ladite étape de sélection (E18) est précédée d'une étape de pré-sélection (E10 à E16) de plusieurs serveurs périphériques et d'étapes d'instanciation (E13) d'une application pour ledit dispositif mobile dans les serveurs périphériques pré-sélectionnés.

**7.** Procédé de réattribution selon la revendication 6, **caractérisé en ce que** lors de ladite étape de pré-sélection, ledit organe de gestion envoie une requête à chacun desdits serveurs périphériques pré-sélectionnés et reçoit en réponse une estimation de la qualité de service relative à l'application instanciée dans chacun desdits serveurs périphériques pré-sélectionnés.

**8.** Procédé de réattribution selon l'une quelconque des revendications 1 à 7, **caractérisé en ce que** lors de ladite étape de sélection (E10 à E16), l'organe de gestion tient compte d'un itinéraire prévu pour le dispositif mobile, et d'une vitesse estimée dudit dispositif mobile sur ledit itinéraire.

**9.** Procédé de réattribution selon l'une quelconque des revendications 1 à 8, **caractérisé en ce que** ledit message envoyé par le dispositif mobile et comportant une qualité de service mesurée, comporte également une donnée de localisation dudit dispositif mobile.

**10.** Système comprenant un organe de gestion (MEO) et un dispositif mobile apte à envoyer un message comportant une qualité de service mesurée au niveau dudit dispositif mobile, à l'organe de gestion (MEO), mettant en œuvre le procédé selon l'une quelconque des revendications 1 à 9.

**11.** Système selon la revendication 10, selon lequel le dispositif mobile est apte à envoyer périodiquement un message comportant une qualité de service mesurée audit organe de gestion.

**12.** Système selon la revendication 10, selon lequel le dispositif mobile est **caractérisé en ce qu'**il comporte des moyens aptes à déclencher l'envoi dudit message lorsque ladite qualité de service mesurée est comprise entre un seuil de qualité de service à ne pas dépasser et une valeur située 20% en amont dudit seuil de qualité de service à ne pas dépasser.

**Patentansprüche**

**1.** Verfahren zur Neuzuweisung eines Datenverarbeitungs-Peripherieservers in einer Architektur Mobile Edge Computing, MEC, das aufweist:

- einen vorhergehenden Schritt (E1) der Zuweisung eines aktuellen Peripherieservers (SMEC) zur Verarbeitung von Daten für eine mobile Vorrichtung durch ein Verwaltungsorgan (MEO),
- einen Schritt der Auswahl (E18) eines neuen Peripherieservers (TMEC) durch das Verwaltungsorgan (MEO),
- und einen Schritt der Mitteilung (E19) der Neuzuweisung eines Peripherieservers an den aktuellen Peripherieserver (SMEC) durch das Verwaltungsorgan (MEO),

wobei das Neuzuweisungsverfahren **dadurch gekennzeichnet ist, dass** vor dem Auswahlschritt (E18) ein Schritt (E17) des Empfangs einer Nachricht durch das Verwaltungsorgan (MEO) liegt, die von der mobilen Vorrichtung gesendet wird und einen für eine im Bereich der mobilen Vorrichtung gemessene Dienstqualität repräsentativen Datenwert aufweist.

2. Neuzuweisungsverfahren nach Anspruch 1, **dadurch gekennzeichnet, dass** die gemessene Dienstqualität für das Zeitintervall zwischen dem Zeitpunkt, zu dem eine Datenverarbeitungsanforderung von der mobilen Vorrichtung an den aktuellen Peripherieserver (SMEC) gesendet wird, und dem Zeitpunkt repräsentativ ist, zu dem die mobile Vorrichtung die Ergebnisse der Datenverarbeitung empfängt.

3. Neuzuweisungsverfahren nach Anspruch 1 oder 2, **dadurch gekennzeichnet, dass** vor dem Auswahlschritt (E18) ein Vergleichsschritt der gemessenen Dienstqualität mit einer Dienstqualitätsschwelle liegt, wobei der Auswahlschritt (E18) ausgelöst wird, sobald die gemessene Dienstqualität die Dienstqualitätsschwelle erreicht.

4. Neuzuweisungsverfahren nach einem der Ansprüche 1 bis 3, **dadurch gekennzeichnet, dass** im Auswahlschritt (E18) das Verwaltungsorgan den neuen Peripherieserver (TMEC) als denjenigen mit einer besseren geschätzten Dienstqualität als die gemessene Dienstqualität in einer Liste von Peripherieservern anders als der aktuelle Peripherieserver (SMEC) auswählt, wobei die Peripherieserver:

   - fähig sind, die Daten der mobilen Vorrichtung zu verarbeiten,
   - mit der aktuellen Basisstation der mobilen Vorrichtung oder mit der aktuellen Basisstation benachbarten Basisstationen verbunden sind,
   - und vom Informationsdienst Radio Network Information Service, RNIS, des Funknetzes profitieren,

   wobei die geschätzte Dienstqualität unter Verwendung eines deterministischen oder prädiktiven Modells geschätzt wurde.

5. Neuzuweisungsverfahren nach einem der Ansprüche 1 bis 4, **dadurch gekennzeichnet, dass** vor dem Auswahlschritt (E18) ein Vorauswahlschritt (E10 bis E16) mehrerer Peripherieserver liegt, während dessen das Verwaltungsorgan eine Anforderung an jeden der vorausgewählten Peripherieserver sendet und als Antwort eine A-priori-Schätzung der Dienstqualität bezüglich der Verbindung jedes der vorausgewählten Peripherieserver mit der mobilen Vorrichtung empfängt.

6. Neuzuweisungsverfahren nach einem der Ansprüche 1 bis 5, **dadurch gekennzeichnet, dass** vor dem Auswahlschritt (E18) ein Vorauswahlschritt (E10 bis E16) mehrerer Peripherieserver und Schritte der Instanziierung (E13) einer Anwendung für die mobile Vorrichtung in den vorausgewählten Peripherieservern liegen.

7. Neuzuweisungsverfahren nach Anspruch 6, **dadurch gekennzeichnet, dass** im Vorauswahlschritt das Verwaltungsorgan eine Anforderung an jeden der vorausgewählten Peripherieserver sendet und als Antwort eine Schätzung der Dienstqualität bezüglich der instanziierten Anwendung in jedem der vorausgewählten Peripherieserver empfängt.

8. Neuzuweisungsverfahren nach einem der Ansprüche 1 bis 7, **dadurch gekennzeichnet, dass** im Auswahlschritt (E10 bis E16) das Verwaltungsorgan eine für die mobile Vorrichtung vorgesehene Route und eine geschätzte Geschwindigkeit der mobilen Vorrichtung auf der Route berücksichtigt.

9. Neuzuweisungsverfahren nach einem der Ansprüche 1 bis 8, **dadurch gekennzeichnet, dass** die Nachricht, die von der mobilen Vorrichtung gesendet wird und eine gemessene Dienstqualität aufweist, ebenfalls einen Lokalisierungsdatenwert der mobilen Vorrichtung aufweist.

10. System, das ein Verwaltungsorgan (MEO) und eine mobile Vorrichtung enthält, die fähig ist, eine Nachricht, die eine im Bereich der mobilen Vorrichtung gemessene Dienstqualität aufweist, an das Verwaltungsorgan (MEO) zu senden, das das Verfahren nach einem der Ansprüche 1 bis 9 durchführt.

11. System nach Anspruch 10, gemäß dem die mobile Vorrichtung fähig ist, periodisch eine eine gemessene Dienstqualität aufweisende Nachricht an das Verwaltungsorgan zu senden.

12. System nach Anspruch 10, wobei die mobile Vorrichtung **dadurch gekennzeichnet ist, dass** sie Einrichtungen aufweist, die fähig sind, das Senden der Nachricht auszulösen, wenn die gemessene Dienstqualität zwischen einer nicht zu überschreitenden Dienstqualitätsschwelle und einem Wert liegt, der sich 20% oberhalb der nicht zu überschreitenden Dienstqualitätsschwelle befindet.

## Claims

1. Method for reallocating a data processing peripheral server in a mobile edge computing, MEC, architecture, comprising:

   - a prior step (E1) of allocating, by a management unit (MEO), a current peripheral server (SMEC) for processing data for a mobile device,
   - a step (E18) of selecting, by said management unit (MEO), a new peripheral server (TMEC),
   - and a step (E19) of notifying, by said management unit (MEO), of peripheral server reallocation to said current peripheral server (SMEC),

   said reallocation method being **characterized in that** said selection step (E18) is preceded by a step (E17) of receiving, by said management unit (MEO), a message sent by said mobile device and comprising a data item representing a quality of service measured on the mobile device.

2. Reallocation method according to Claim 1, **characterized in that** said measured quality of service represents the time interval between the instant at which a data processing request is sent by the mobile device to the current peripheral server (SMEC) and the instant at which the mobile device receives the results of said data processing.

3. Reallocation method according to Claim 1 or 2, **characterized in that** said selection step (E18) is preceded by a step of comparing said measured quality of service with a quality of service threshold, said selection step (E18) being triggered as soon as said measured quality of service reaches said quality of service threshold.

4. Reallocation method according to any one of Claims 1 to 3, **characterized in that**, during said selection step (E18), said management unit selects said new peripheral server (TMEC) as being that with a quality of service that is estimated as being better than said measured quality of service in a list of peripheral servers other than the current peripheral server (SMEC), said peripheral servers being:

   - able to process said data of the mobile device,
   - connected to the current base station of the mobile device or to base stations neighbouring said current base station,
   - and benefiting from the Radio Network Information Service, RNIS, service,

   said estimated quality of service having been estimated using a deterministic or predictive model.

5. Reallocation method according to any one of Claims 1 to 4, **characterized in that** said selection step (E18) is preceded by a step (E10 to E16) of preselecting a plurality of peripheral servers, during which step said management unit sends a request to each of said preselected peripheral servers and in response receives an a priori estimation of the quality of service relating to the connection of each of said preselected peripheral servers with said mobile device.

6. Reallocation method according to any one of Claims 1 to 5, **characterized in that** said selection step (E18) is preceded by a step (E10 to E16) of preselecting a plurality of peripheral servers and by steps (E13) of instantiating an application for said mobile device in the preselected peripheral servers.

7. Reallocation method according to Claim 6, **characterized in that**, during said preselection step, said management unit sends a request to each of said preselected peripheral servers and in response receives an estimation of the quality of service relating to the application instantiated in each of said preselected peripheral servers.

8. Reallocation method according to any one of Claims 1 to 7, **characterized in that**, during said selection step (E10 to E16), the management unit takes into account a scheduled itinerary for the mobile device and an estimated speed of said mobile device over said itinerary.

9. Reallocation method according to any one of Claims 1 to 8, **characterized in that** said message sent by the mobile device and comprising a measured quality of service also comprises a location data item of said mobile device.

10. System comprising a management unit (MEO) and a mobile device able to send a message comprising a quality of service measured on said mobile device to the management unit (MEO), implementing the method according to any one of Claims 1 to 9.

11. System according to Claim 10, in which the mobile device is able to periodically send a message comprising a measured quality of service to said management unit.

12. System according to Claim 10, in which the mobile device is **characterized in that** it comprises means able to trigger the sending of said message when said measured quality of service is within a quality of service threshold that must not be exceeded and a value located 20% before said measured quality of service threshold that must not be exceeded.

| V | SMEC | SRNIS | MEO | TRNIS | TMEC |
|---|---|---|---|---|---|

E2

E1

E3

E4

E5

E6

E7

E8

E9

E10

E11

E12

Fig.1

Fig.2

## RÉFÉRENCES CITÉES DANS LA DESCRIPTION

**Documents brevets cités dans la description**

- US 2017220394 A1

- US 2013311551 A1

**Littérature non-brevet citée dans la description**

- *Mobile Edge Computing (MEC); End to End Mobility Aspects,* 23 Juin 2017